# EUROPEAN PATENT APPLICATION

(11) **EP 1 455 288 A2**
(43) Date of publication of application: **08.09.2004**
(21) Application number: 03027340.3
(22) Date of filing: 26.11.2003
(51) Int. Cl.: G06F 17/60

(54) **Portable terminal suitable for displaying related electronic mail and program for displaying electronic mail**

(30) Priority: 27.11.2002 JP 2002344121
(71) Applicant: NEC CORPORATION, Tokyo (JP)
(72) Inventor: Ozaki, Ichiro Nec Access Technica, Ltd., Shizuoka (JP)
(74) Representative: Glawe. Delfs. Moll

(57) **Abstract**

To readily enable display of circumstances of an electronic mail displayed by a user, by automatically extracting and arranging electronic mails related to the electronic mail to be displayed on a portable terminal. There are included an operation unit 12 on which the user performs an entry operation, a display unit 11, a radio transmitting and receiving unit 13 for making a call to and exchanging information with an outside by wireless communication, a storage unit 15 having a mail region 21 for storing transmitted and received electronic mails, a mail processing unit 22 for performing processing for external transmission or reception of an electronic mail through the radio transmitting and receiving unit 13, display of the transmitted or received mail on the display unit 11, and storage of the transmitted or received mail in the mail region 21, and a relating unit 23 for extracting one or more related electronic mails from the mail region 21 based on a relating condition for a specified electronic mail being displayed on the display unit 11, specified by an operation of the user, and then displaying the one or more related mails.

## Description

### FIELD OF THE INVENTION

The present invention relates to a portable terminal suitable for displaying a related electronic mail, a method of displaying an electronic mail, and a program for displaying the electronic mail. More specifically, the invention relates to a technique for automatically editing and displaying the related mail by an easy operation in a state where the electronic mail is displayed.

### BACKGROUND OF THE INVENTION

Users have come to receive electronic mail service, using portable terminals such as cellular phones or personal data assistants. An electronic mail is transmitted from and received at a portable terminal via a mail server for receiving and transmitting electronic mails over a wide area network. Upon reception of the electronic mail addressed to a device for which the service is provided, the mail server temporarily stores the electronic mail in a mail box provided for each device for which the service is provided. The user operates his portable terminal, extracts an electronic mail addressed to him from the mail server to the portable terminal, and displays the electronic mail on a display device of the portable terminal.

JP Patent Kokai Publication JP-A-7-99508 discloses a technique by which when the user places an ordinary telephone call, an electronic mail center searches for electronic mail information stored therein, extracts an electronic mail or an electronic mail list communicated between the user and a party(collocutor), transmits the electronic mail or the electronic mail list to the user and the party(collocutor) for display on their terminals. In this invention, by processing at the electronic mail center, the user obtains the electronic mail recently communicated during a telephone conversation and can talk with the party(collocutor) while he sees display of this mail.

### Patent Document 1:

JP Patent Kokai Publication JP-A-7-99508

### SUMMARY OF THE DISCLOSURE

However, in a conventional technique for displaying an electronic mail on the portable terminal, a display area of a display unit of the portable terminal cannot be made large. Thus, communication using short sentences is mainly performed due to a limitation on an amount of electronic mail information, and an excerpt from an original electronic mail, a history of the original electronic mail, and the like as in a common electronic mail are frequently excluded. Thus, a problem arises that the user is hard to keep track of circumstances of the electronic mail he has read out.

Further, the portable terminal makes a distinction between electronic mails for transmission and electronic mails for reception, for separate storage. The user performs a search operation for display, based on a state of storage. When the history of electronic mails for which replies have been repeated to each other between the users is tracked, it was necessary to alternately perform searches across the transmitted electronic mails and the received electronic mails, for display. Accordingly, the problem arises that the user must repeat bothering search operations when a series of related electronic mails are displayed.

According to the invention in JP Patent Kokai JP-A-7-99508, electronic mails related to the user are stored in the electronic mail center, and by using a service function of the electronic mail center, display of a latest electronic mail and a latest electronic mail list communicated with a party(collocutor) can be displayed during a telephone conversation. However, it is necessary to store the electronic mails of the user in the electronic mail center, and an expense such as the one for usage must be paid because the service of the electronic mail center is used.

An object of the present invention is to provide a portable terminal having a function capable of readily displaying circumstances of an electronic mail displayed by a user by automatic extraction and arrangement of related mails for display on the portable terminal, a method of displaying the electronic mail, and a program for displaying the electronic mail.

According to first aspect of the present invention, A portable terminal comprises:
a mail region storing transmitted and received electronic mails;
a mail processing unit performing processing for transmission, reception, and display of an electronic mail and storage of the electronic mail in the mail region; and
a relating unit extracting one or more related electronic mail(s) from said mail region based on a relating condition specified by an operation of a user to the electronic mail being displayed, and then displaying said one or more related electronic mail(s).

According to second aspect of the present invention, A portable terminal comprises:
an operation unit on which a user performs an entry operation;
a display unit;
a radio transmitting and receiving unit for communicating(making a call to and exchanging information with an outside) through wireless communication;
a storage unit having a mail region for storing transmitted and received electronic mails;
a mail processing unit performing processing for (external) transmission or reception of an electronic mail through the radio transmitting and receiving unit, display of the transmitted or received electronic mail on the display unit, and storage of the transmitted or received electronic mail in the mail region; and
a relating unit extracting one or more related electronic mails from said mail region based on a relating condition specified by an operation of a user to the electronic mail being displayed, and then displaying said one or more related electronic mails.

According to third aspect of the present invention, A portable terminal is characterized in that in the aforementioned portable terminal, the electronic mail includes date and time information comprising a date and a time of transmission or reception; and
the relating unit arranges the electronic mails extracted from the mail region in an order of dates and time of the date and time information, for display.

According to fourth aspect of the present invention, A portable terminal is characterized in that in the aforementioned portable terminal, the electronic mail includes address information of a transmitting destination or a receiving source; and
when the relating condition is a condition requiring that address information A included in the electronic mail being displayed match the address information of the transmitting destination or the receiving source, the relating unit extracts one or more electronic mail(s) including the address information A from the mail region, for display.

According to fifth aspect of the present invention, A portable terminal is characterized in that in the aforementioned portable terminal, the electronic mail includes subject information comprising a subject; and
when the relating condition is a condition requiring that subject information B included in the electronic mail being displayed match the subject, the relating unit extracts one or more electronic mail(s) including the subject information B from the mail region, for display.

According to sixth aspect of the present invention, A portable terminal comprises:
a mail region storing transmitted and received electronic mails;
a mail processing unit performing processing for transmission, reception, and display of an electronic mail and storage of the electronic mail in the mail region; and
a relating unit extracting one or more related electronic mails from said mail region based on a relating condition specified by an operation of a user to the electronic mail being displayed, and then displaying said one or more related electronic mails; wherein
the electronic mail includes:
   address information of a transmitting destination or a receiving source;
   subject information comprising a subject; and
   date and time information comprising a date and a time of transmission or reception;
   the mail processing unit displays on a screen displaying the electronic mail information for selecting as a related mail an electronic mail having a same address or an electronic mail having a same subject as the electronic mail being displayed; and
   when a selecting operation is performed on the screen displaying the electronic mail, the relating unit obtains information on the related mail,
   when the same address has been specified as a condition, said relating unit extracts from said mail region electronic mails having the same address as the mail being displayed, and arranges the electronic mails in a chronological order, for display, and
   when the same subject has been specified as a condition, said relating unit extracts from said mail region electronic mails having the same subject as the mail being displayed, and arranges the electronic mails in the chronological order, for display.

According to seventh aspect of the present invention, A method of displaying electronic mails at a portable terminal comprises the steps of:
storing electronic mails transmitted from and received at a portable terminal in a mail region provided for said portable terminal ; and extracting a related electronic mail from said mail region based on a predetermined relating condition when a user commands display of the related mail through a screen of a display unit of said portable terminal displaying the electronic mail and then displaying the related mail.

According to eighth aspect of the present invention, A method of displaying electronic mails at a portable terminal comprises the steps of:
storing electronic mails transmitted from and received at a portable terminal in a mail region provided for the portable terminal; and
extracting from the mail region related electronic mails based on a predetermined relating condition when a user commands display of the related mails through a screen of a display unit of the portable terminal displaying the electronic mail and then arranging the related electronic mails in an order of date and time of date and time information comprising the dates and times of transmission or reception included in the electronic mails, for display.

According to ninth aspect of the present invention, A method of displaying electronic mails at a portable terminal comprises the steps of:
storing electronic mails transmitted from and received at a portable terminal in a mail region provided for the portable terminal; and
extracting from the mail region an electronic mail having same address information as address information of a transmitting destination or a receiving source included in the electronic mail being displayed, for display, when a user commands display of a related mail through a screen of a display unit of the portable terminal displaying the electronic mail.

According to tenth aspect of the present invention, A method of displaying electronic mails at a portable terminal comprises the steps of:
storing electronic mails transmitted from and received at a portable terminal in a mail region provided for the portable terminal; and
extracting from the mail region an electronic mail having same subject information as subject information comprising a subject included in the electronic mail being displayed, for display, when a user commands display of a related mail through a screen of a display unit of the portable terminal displaying the electronic mail.

According to eleventh aspect of the present invention, A method of displaying electronic mails at a portable terminal comprises the steps of:
storing electronic mails transmitted from or received at a portable terminal in a mail region provided for the portable terminal, the electronic mails each including address information of a transmitting destination or a receiving source, subject information comprising a subject, and date and time information comprising a date and a time of transmitting or receiving each of the electronic mails;
displaying on a same screen information for selecting as a related mail an electronic mail having a same address as an address of the electronic mail being displayed or an electronic mail having a same subject as an subject of the electronic mail being displayed, during display of the electronic mail; and
obtaining information on the related mail when an selecting operation is performed on the screen displaying the electronic mail, extracting from the mail region electronic mails including the same address as an address of the electronic mail being displayed when the same address has been specified as a condition, and arranging the electronic mails in a chronological order, for display, and extracting from the mail region electronic mails having the same subject as the subject of the electronic mail being displayed when the same subject has been specified as a condition, and arranging the electronic mails in the chronological order, for display.

According to twelfth aspect of the present invention, A program causes a computer to execute the steps of:
storing electronic mails transmitted from and received at a portable terminal in a mail region provided for the portable terminal; and
extracting a related electronic mail from said mail region based on a predetermined relating condition , when a user commands display of the related electronic mail through a screen of a display unit of said portable terminal displaying an electronic mail and then displaying the related mail.

According to thirteenth aspect of the present invention, A program causes a computer to execute the steps of:
storing electronic mails transmitted from and received at a portable terminal in a mail region provided for the portable terminal; and
extracting related electronic mails based on a predetermined relating condition when a user commands display of the related electronic mails through a screen of a display unit of said portable terminal displaying an electronic mail, and arranging the related electronic mails in an order to date and time of date and time information comprising the dates and times of transmission or reception included in the electronic mails, for display.
extracting related electronic mails based on a predetermined relating condition when a user commands display of the related electronic mails through a screen of a display unit of the portable terminal displaying an electronic mail, and arranging the related electronic mails in an order to date and time of date and time information comprising the dates and times of transmission or reception included in the electronic mails, for display.

According to fourteenth aspect of the present invention, A program causes a computer to execute the steps of:
storing electronic mails transmitted from and received at a portable terminal in a mail region provided for the portable terminal; and
extracting from the mail region an electronic mail having same address information as address information of a transmitting destination or a receiving source included in an electronic mail being displayed, for display, when a user commands display of a related mail through a screen of a display unit of the portable terminal displaying the electronic mail.

According to fifteenth aspect of the present invention, A program causes a computer to execute the steps of:
storing electronic mails transmitted from and received at a portable terminal in a mail region provided for the portable terminal; and
extracting from the mail region an electronic mail having same subject information as subject information comprising a subject, included in an electronic mail being displayed when a user commands display of a related mail through a screen of a display unit of the portable terminal displaying the electronic mail.

According to sixteenth aspect of the present invention, A program causes a computer to execute the steps of:
storing electronic mails transmitted to or received at a portable terminal in a mail region provided for the terminal device, the electronic mails each including address information of a transmitting destination or a receiving source, subject information comprising a subject, and date and time information comprising a date and a time of transmitting or receiving each of the electronic mails;
displaying on a same screen information for selecting as a related mail an electronic mail having a same address or an electronic mail having a same subject as the electronic mail being displayed, during display of the electronic mail; and
obtaining information on the related mail when a selecting operation is performed on the screen displaying the electronic mail, extracting from the mail region electronic mails including the same address as an address of the electronic mail being displayed when the same address has been specified as a condition, arranging the electronic mails in a chronological order, for display, and extracting from the mail region electronic mails having the same subject as the subject of the electronic mail being displayed when the same subject has been specified as a condition, and arranging the electronic mails in the chronological order, for display.

### BRIEF DESCRIPTION OF THE DRAWINGS

Fig. 1 is a block diagram showing a configuration of an embodiment of the present invention;
Fig. 2 comprises diagrams showing images of a mail region 21 according to the embodiment of the present invention;
Fig. 3 is a flowchart showing an operation of the embodiment of the present invention;
Fig. 4 shows an example of display screens of the present invention; and
Fig. 5 shows an example of display screens of the present invention.

### PREFERRED EMBODIMENT OF THE INVENTION

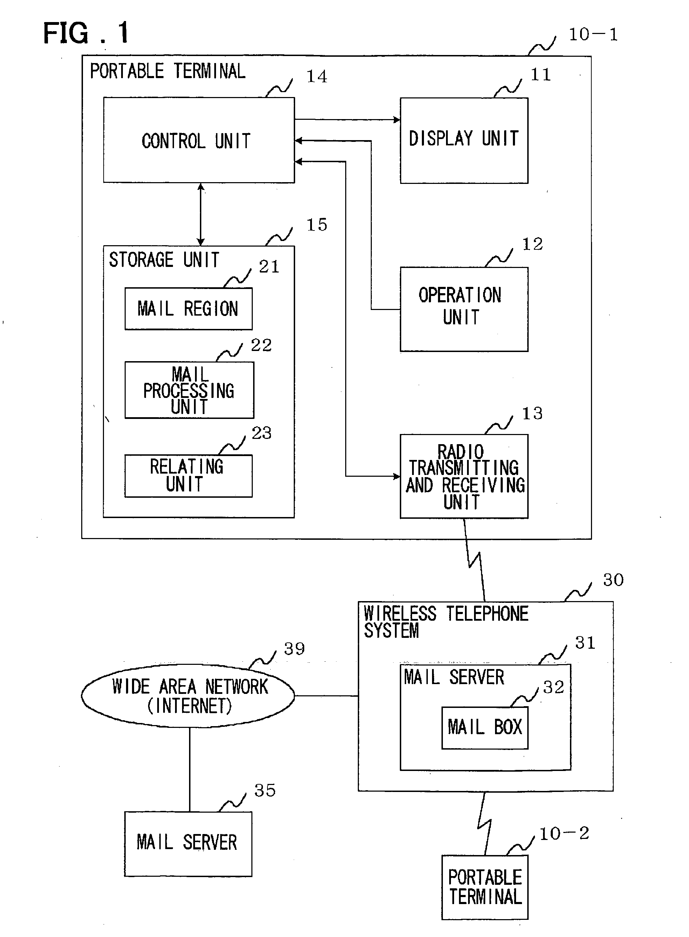

Next, an embodiment of the present invention will be described in detail with reference to drawings. Fig. 1 is a block diagram showing a configuration of an embodiment of the present invention. A portable terminal 10 (Fig. 1 including portable terminals 10-1 and 10-2) is a portable information device such as a cellular phone or a PDA (Personal Digital Assistant). The portable terminal 10 includes a display unit 11, an operation unit 12 on which a user performs an operation such as key entry, a radio transmitting and receiving unit 13 for communicating with a wireless telephone system 30 by wireless communication, a control unit 14 for executing various processing of the portable terminal 10, and a storage unit 15.

The storage unit 15 includes a mail region 21, a mail processing unit 22, and a relating unit 23. The mail region 21 stores transmitted and received electronic mails. The mail processing unit 22 performs transmission and reception of an electronic mail, display of the mail, and management over the mail region 21. The relating unit 23 extracts electronic mails in the mail region 21 based on a given criterion, for arrangement. The mail processing unit 22 and the relating unit 23 are programs run on a computer, and are executed by the control unit 14 in Fig. 1. In Fig. 1, though the mail processing unit 22 and the relating unit 23 are disposed in the storage unit 15, they may be stored in other memory for reading (such as a ROM, a flash memory, or the like, not shown), and no restriction is imposed on a location for storing them.

The wireless telephone system 30 is a system constructed by a provider that offers wireless telephone service. In most cases, the wireless telephone system 30 includes radio base stations for directly performing wireless communications with the portable terminals 10-1 and 10-2, a mail server 31 for offering electronic mail service, information processing devices and communication devices for offering other services, and communication means for connecting these devices. However, no restriction is imposed on an internal configuration of the system. The wireless telephone system 30 is connected to a wide area network 29 such as an Internet or a public telephone network and also implements communication service with other system.

The mail server 31 has a function of transmitting an electronic mail in response to a request from a contract user, temporarily holding a received electronic mail in a mail box 32 provided for each contract user, and delivering an electronic mail addressed to the user and held therein in response to an acquisition request from the user. Though a mail server 35 is installed in a location different from the mail server 31, the mail server 35 has a same function as the mail server 31.

The mail region 21 is a region that stores received mails obtained from the mail server and mails transmitted to the mail server with which the portable terminal 10 makes a contract for electronic mail service. The mail server with which the contract has been made may be the mail server 31 installed in the wireless telephone system 30 or the mail server 35 connected to the wide area network 39. A following description will be given, provided that the contract has been made with the mail server 31.

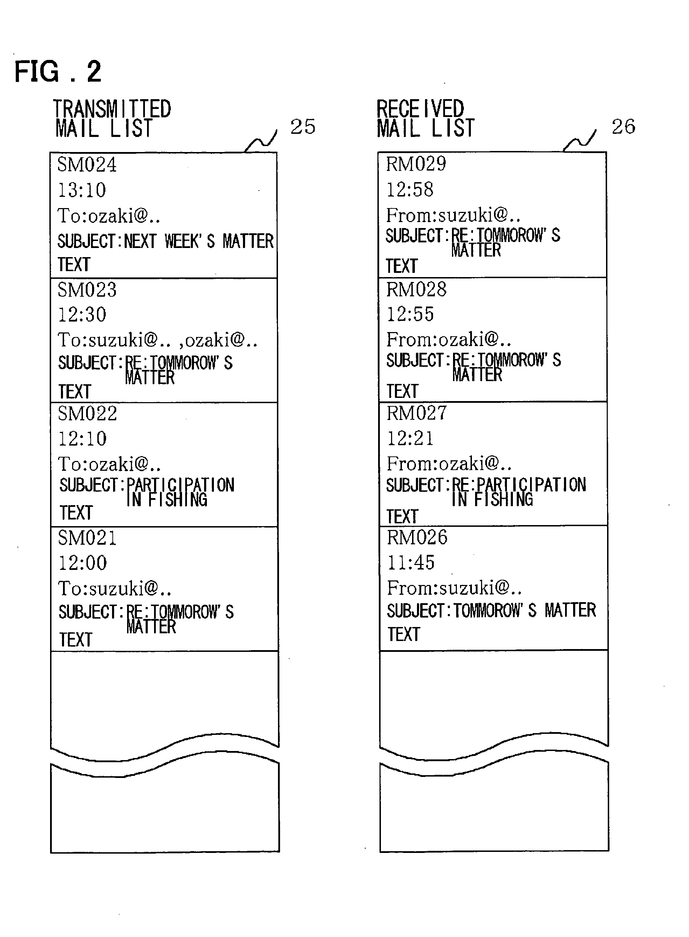

Fig. 2 comprise diagrams showing a transmitted mail list 25 and a received mail list 26, stored in the mail region 21. The transmitted mail list 25 stores electronic mails transmitted by the mail processing unit 22. The received mail list 26 is obtained from the mail server 31 with which the contract has been made, by the mail processing unit 22, and stored. Fig. 2 shows logical images to be stored, and does not show physical locations to be actually stored on the storage unit 15. Each information constituting an electronic mail may be separated for storage. No particular restriction is imposed on the physical locations of electronic mails.

Generally, an electronic mail is constituted from time stamp information showing a date and a time when transmission or reception has been performed, address information indicating a transmitting destination or a receiving source, subject information that constitutes a subject, and mail text information. Referring to Fig. 2, numbers for identifying respective electronic mails are given.

The mail processing unit 22 includes a step of generating a mail to be transmitted, according to input from the user for transmission and storing the mail in the transmitted mail list 25, a step of obtaining a received mail from the mail server 31 through operation by the user, displaying the mail on the display unit 11, and storing the mail in the received mail list 26, and a step of displaying a specified electronic mail on the display unit 11 through operation by the user. For specifying the electronic mail for display, there is a method or the like, by which a listing of extracted partial information (such as addresses and subjects) is created based on the transmitted mail list 25 or the received mail list 26, for display on the display unit 11 so as to be selected by the user. However, no particular restriction is imposed on the method of specification.

The relating unit 23 includes a step of extracting electronic mails related to the electronic mail being displayed from the transmitted mail list 25 or the received mail list 26 according to operation by the user, arranging the extracted electronic mails in a chronological order, and displaying the extracted electronic mails on the display unit 11. An extraction criterion, for example, includes a party who is the same as the party for the electronic mail being displayed or a subject that is the same as the subject of the electronic mail being displayed.

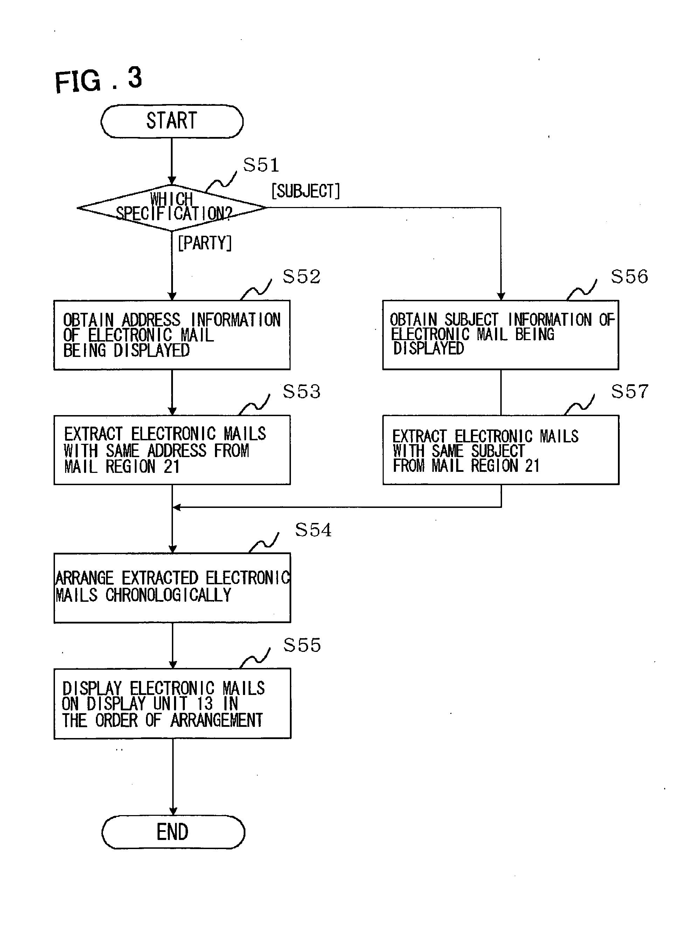

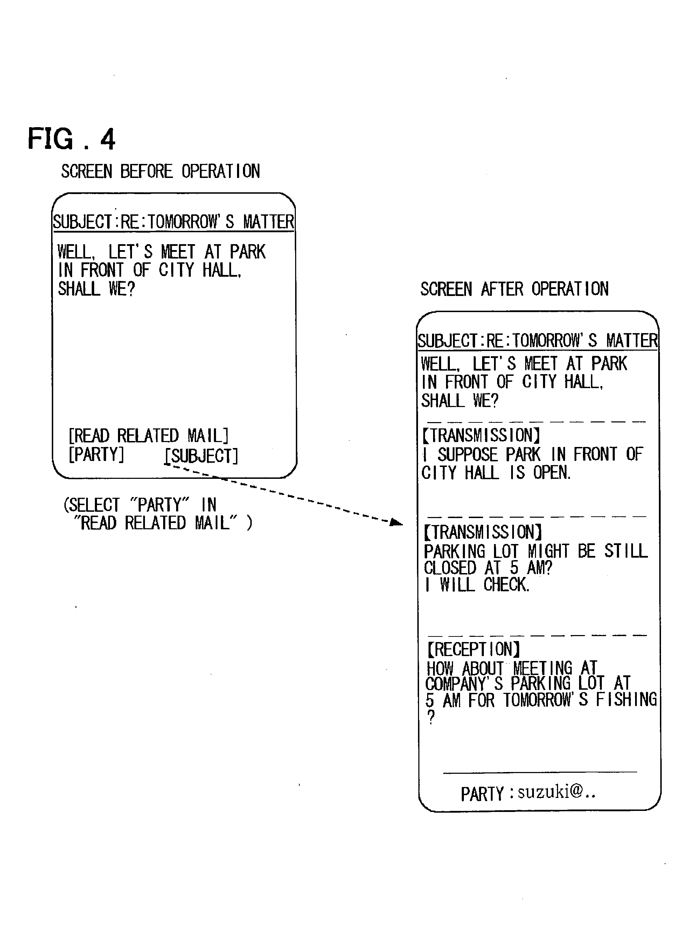

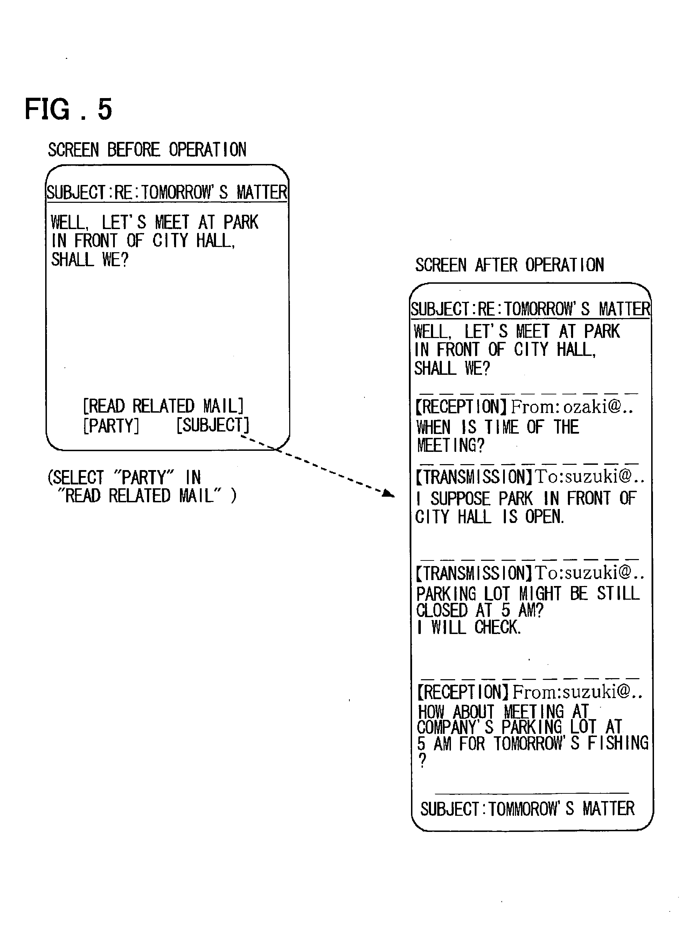

Next, an operation of the embodiment of the present invention will be described with reference to the drawings. Fig. 3 is a flowchart showing the operation of the embodiment of the present invention. First, an operation from a state where the electronic mail specified by the user has been displayed on the display unit 11 using the mail processing unit 22 will be described. The electronic mail specified by the user on initial screens shown on a left side of each of Figs. 4 and 5 before related mails are read, is assumed to be the received mail numbered RM029 in Fig. 2.

First, when the user reads the related mails, the user selects the "party" or "subject" on the initial screen in Fig. 4 or Fig. 5. If the function is limited to either one, display of the "party" or the "subject " is not performed; and only display of "read related mails" should be performed, and the user should only perform the operation of executing reading of the related mails.

### (1) Operation When the "Party" Has Been Selected

When the user selects the "party", the relating unit 23 is activated, and a content of selection is confirmed (at S51). Then, "suzuki@.. " (".." after @ shows omission because ".." does not need to be determined in particular), which is the address information of the electronic mail numbered RM029 being currently displayed is obtained from the received mail list 26 in the mail region 21 (at S52).

Next, the electronic mail with its address "suzuki@.." is extracted with reference to the transmitted mail list 25 and the received mail list 26 (at S53). In this case, SM021 and SM023 are extracted from the transmitted mail list 25, and RM026 is extracted from the received mail list 26.

Next, time information of the extracted electronic mails are compared and arranged chronologically from SM023, SM021, and RM026 (at S54). Next, predetermined electronic mail information is read from the arranged electronic mails and displayed chronologically (at S55). The screen after the operation on a right side of Fig. 4 shows the content of display. Fig. 4 displays distinctions between transmission and reception and text information for each electronic mail, and chronologically displays electronic mails. Fig. 4 shows at last the "party: suzuki@..", which indicates display of electronic mails from and to the same party.

The screen after the operation in Fig. 4 shows displayed images. If all contents cannot be displayed on the screen of a size of the display unit 11, the screen may be scrolled so as to enable display. In addition to the text information shown in Fig. 4, time information may also be combined for display; no particular restriction is imposed on information to be displayed.

### (2) Operation When "Subject" Has Been Selected

When the user selects the "subject ", the relating unit 23 is activated, and the content of selection is confirmed (at S51). Then, "Re: Tomorrow's Matter", which is the subject information of the electronic mail RM029 being currently displayed is obtained from the received mail list 26 in the mail region 21 (at S55).

Next, an electronic mail, of which the subject is "Re: Tomorrow's Matter" is extracted with reference to the transmitted mail list 25 and the received mail list 26 (at S57). In this case, an "Re:" part is a special character string indicating a reply. Thus, "Tomorrow's Matter" as well as "Re:" is included for extraction. Referring to Fig. 2, SM021 and SM023 are extracted from the transmitted mail list 25, and RM026 and RM028 are extracted from the received mail list 26.

Next, time information of the extracted electronic mails is compared and arranged chronologically from RM028, SM023, SM021, and RM026 (at S54). Next, predetermined electronic mail information is read from the arranged electronic mails and displayed chronologically (at S55). The screen after operation on the right side of Fig. 5 shows the content of display. Fig. 5 displays the distinction between transmission and reception, address information, and text information for each electronic mail, and chronologically displays electronic mails. Fig. 5 finally displays the "Subject: Re: Tomorrow's Matter" indicating display of electronic mails having the same subject.

Like Fig. 4, the screen after the operation in Fig. 5 also shows display images. When all contents cannot be displayed on the screen of the size of the display unit 11, the screen may be scrolled to enable display. Further, in addition to text information and address information shown in Fig. 5, time information may also be combined for display. No particular restriction is imposed on the information to be displayed.

In this manner, the user can arrange related electronic mails chronologically for display by specification of the party or the subject through an easy operation, in the state where a parent electronic mail is displayed. Thus, the user can readily read details about related communication to the party.

A foregoing description was directed to the case where the address of the party is one. However, by adding the function of specifying parties exceeding two, electronic mails with the addresses for the specified parties exceeding two may be extracted and arranged for display. There is no need to limit a number of the parties to one. Since a technique for implementing this can be readily understood from the foregoing description, a detailed description will be omitted.

The meritorious effects of the present invention are summarized as follows.
As described above, according to the present invention, when the user reads electronic mails related to an electronic mail being displayed, he can automatically display related mails through an easy operation. Thus, the user can read the details about communication using the electronic mails without performing a bothering operation.

Further, since extraction and arrangement of electronic mails are processed inside the portable terminal, display of related mails can be readily performed, without depending on service externally prepared for. Thus, a fee for the external service becomes unnecessary, and the related mails can be displayed at any time irrespective of whether the display is performed during a telephone call or not.
It should be noted that other objects, features and aspects of the present invention will become apparent in the entire disclosure and that modifications may be done without departing the gist and scope of the present invention as disclosed herein and claimed as appended herewith.
Also it should be noted that any combination of the disclosed and/or claimed elements, matters and/or items may fall under the modifications aforementioned.

## Claims

1. A portable terminal comprising:
a mail region storing transmitted and received electronic mails;
a mail processing unit performing processing for transmission, reception, and display of an electronic mail and storage of the electronic mail in said mail region; and
a relating unit extracting one or more related electronic mails from said mail region based on a relating condition specified by an operation of a user to the electronic mail being displayed, and then displaying said one or more related electronic mails.

2. A portable terminal comprising:
an operation unit on which a user performs an entry operation;
a display unit;
a radio transmitting and receiving unit communicating through wireless communication;
a storage unit having a mail region storing transmitted and received electronic mails;
a mail processing unit performing processing for transmission or reception of an electronic mail through said radio transmitting and receiving unit, display of the transmitted or received electronic mail on said display unit, and storage of the transmitted or received electronic mail in said mail region; and
a relating unit extracting one or more related electronic mails from said mail region based on a relating condition specified by an operation of a user to the electronic mail being displayed, and then displaying said one or more related electronic mails.

3. The portable terminal according to claim 1 or 2, wherein the electronic mail includes date and time information comprising a date and a time of transmission or reception; and
said relating unit arranges the electronic mails extracted from said mail region in an order of date and time of the date and time information, for display.

4. The portable terminal according to claim 1 or 2, wherein the electronic mail includes address information of a transmitting destination or a receiving source; and
when the relating condition is a condition requiring that address information A included in the electronic mail being displayed match the address information of the transmitting destination or the receiving source, said relating unit extracts one or more electronic mail including the address information A from said mail region, for display.

5. The portable terminal according to claim 1 or 2, wherein the electronic mail includes subject information comprising a subject; and
when the relating condition is a condition requiring that subject information B included in the electronic mail being displayed match the subject, said relating unit extracts one or more electronic mail including the subject information B from said mail region, for display.

6. A portable terminal comprising:
a mail region storing transmitted and received electronic mails;
a mail processing unit performing processing for transmission, reception, and display of an electronic mail and storage of the electronic mail in said mail region; and
a relating unit extracting one or more related electronic mails from said mail region based on a relating condition specified by an operation of a user to the electronic mail being displayed, and then displaying said one or more related electronic mails; wherein
the electronic mail includes:
address information of a transmitting destination or a receiving source;
subject information comprising a subject; and
date and time information comprising a date and a time of transmission or reception;
said mail processing unit displays on a screen displaying the electronic mail information for selecting as a related mail an electronic mail having a same address or an electronic mail having a same subject as the electronic mail being displayed; and
when a selecting operation is performed on said screen displaying the electronic mail, said relating unit obtains information on the related mail,
when the same address has been specified as a condition, said relating unit extracts from said mail region electronic mails having the same address as the mail being displayed, and arranges the electronic mails in a chronological order, for display, and
when the same subject has been specified as a condition, said relating unit extracts from said mail region electronic mails having the same subject as the mail being displayed, and arranges the electronic mails in the chronological order, for display.

7. A method of displaying electronic mails at a portable terminal, comprising the steps of:
storing electronic mails transmitted from and received at a portable terminal in a mail region provided for said portable terminal ; and
extracting a related electronic mail from said mail region based on a predetermined relating condition when a user commands display of the related mail through a screen of a display unit of said portable terminal displaying the electronic mail and then displaying the related mail.

8. A method of displaying electronic mails at a portable terminal, comprising the steps of:
storing electronic mails transmitted from and received at a portable terminal in a mail region provided for said portable terminal ; and
extracting from said mail region related electronic mails based on a predetermined relating condition when a user commands display of the related mails through a screen of a display unit of said portable terminal displaying the electronic mail and then arranging the related electronic mails in an order of date and time of date and time information comprising the dates and times of transmission or reception included in the electronic mails, for display.

9. A method of displaying electronic mails at a portable terminal, comprising the steps of:
storing electronic mails transmitted from and received at a portable terminal in a mail region provided for said portable terminal ; and
extracting from said mail region an electronic mail having same address information as address information of a transmitting destination or a receiving source included in the electronic mail being displayed, for display, when a user commands display of a related mail through a screen of a display unit of said portable terminal displaying the electronic mail.

10. A method of displaying electronic mails at a portable terminal, comprising the steps of:
storing electronic mails transmitted from and received at a portable terminal in a mail region provided for said portable terminal; and
extracting from said mail region an electronic mail having same subject information as subject information comprising a subject included in the electronic mail being displayed, for display, when a user commands display of a related mail through a screen of a display unit of said portable terminal displaying the electronic mail.

11. A method of displaying electronic mails at a portable terminal, comprising the steps of:
storing electronic mails transmitted from or received at a portable terminal in a mail region provided for said portable terminal, the electronic mails each including address information of a transmitting destination or a receiving source, subject information comprising a subject, and date and time information comprising a date and a time of transmitting or receiving each of the electronic mails;
displaying on a same screen information for selecting as a related mail an electronic mail having a same address as an address of the electronic mail being displayed or an electronic mail having a same subject as an subject of the electronic mail being displayed, during display of the electronic mail; and
obtaining information on the related mail when an selecting operation is performed on said screen displaying the electronic mail, extracting from said mail region electronic mails including the same address as an address of the electronic mail being displayed when the same address has been specified as a condition, and arranging the electronic mails in a chronological order, for display, and extracting from said mail region electronic mails having the same subject as the subject of the electronic mail being displayed when the same subject has been specified as a condition , and arranging the electronic mails in the chronological order, for display.

12. A program for causing a computer to execute the steps of:
storing electronic mails transmitted from and received at a portable terminal in a mail region provided for said portable terminal ; and
extracting a related electronic mail from said mail region based on a predetermined relating condition , when a user commands display of the related electronic mail through a screen of a display unit of said portable terminal displaying an electronic mail and then displaying the related mail.

13. A program for causing a computer to execute the steps of:
storing electronic mails transmitted from and received at a portable terminal in a mail region provided for said portable terminal ; and
extracting related electronic mails based on a predetermined relating condition when a user commands display of the related electronic mails through a screen of a display unit of said portable terminal displaying an electronic mail, and arranging the related electronic mails in an order to date and time of date and time information comprising the dates and times of transmission or reception included in the electronic mails, for display.

14. A program for causing a computer to execute the steps of:
storing electronic mails transmitted from and received at a portable terminal in a mail region provided for said portable terminal ; and
extracting from said mail region an electronic mail having same address information as address information of a transmitting destination or a receiving source included in an electronic mail being displayed, for display, when a user commands display of a related mail through a screen of a display unit of said portable terminal displaying the electronic mail.

15. A program for causing a computer to execute the steps of:
storing electronic mails transmitted from and received at a portable terminal in a mail region provided for said portable terminal ; and
extracting from said mail region an electronic mail having same subject information as subject information comprising a subject, included in an electronic mail being displayed when a user commands display of a related mail through a screen of a display unit of said portable terminal displaying the electronic mail.

16. A program for causing a computer to execute the steps of:
storing electronic mails transmitted to or received at a portable terminal in a mail region provided for said terminal portable the electronic mails each including address information of a transmitting destination or a receiving source, subject information comprising a subject, and date and time information comprising a date and a time of transmitting or receiving each of the electronic mails;
displaying on a same screen information for selecting as a related mail an electronic mail having a same address or an electronic mail having a same subject as the electronic mail being displayed, during display of the electronic mail; and
obtaining information on the related mail when a selecting operation is performed on said screen displaying the electronic mail, extracting from said mail region electronic mails including the same address as an address of the electronic mail being displayed when the same address has been specified as a condition, arranging the electronic mails in a chronological order, for display, and extracting from said mail region electronic mails having the same subject as the subject of the electronic mail being displayed when the same subject has been specified as a condition, and arranging the electronic mails in the chronological order, for display.
